# EUROPÄISCHE PATENTANMELDUNG

(11) **EP 1 158 697 A1**
(43) Veröffentlichungstag der Anmeldung: **28.11.2001**
(21) Anmeldenummer: 00810455.6
(22) Anmeldetag: 25.05.2000
(51) Int. Cl.: H04B 7/145, H04B 7/26

(54) **Verfahren und System zur bidirektionalen Signalübertragung von Radiofrequenzsignalen in drahtlosen lokalen Netzwerken**

(71) Anmelder: Swisscom AG, 3000 Bern 29 (CH)
(72) Erfinder: Brugger, Rudolf, 3700 Spiez (CH)
(74) Vertreter: BOVARD AG - Patentanwälte

(57) **Zusammenfassung**

Ein Verfahren und System zur bidirektionalen Signalübertragung von Radiofrequenzsignalen in einem drahtlosen lokalen Netzwerk, bei welchem eine oder mehrere mobile Einheiten (5/6) mittels Radiofrequenzsignalen im drahtlosen lokalen Netzwerk mit einer Basisstation (1) kommunizieren, welche Basisstation (1) die Radiofrequenzsignale der mobilen Einheiten (5/6) verstärkt und/oder das drahtlose lokale Netzwerk mittels Bridgefunktionen mit einem verdrahteten Festnetzwerk (10) verbindet. Insbesondere werden Radiofrequenzsignale in ursprünglich mit dem Radiofrequenzsignal der Antenne (11) der Basisstation (1) nicht oder ungenügend versorgtes Gebiet (8) und/oder Radiofrequenzsignale von mobilen Einheiten (6) dieses Gebietes (8) zur Antenne (11) der Basisstation (1) geleitet.

## Beschreibung

Die vorliegende Erfindung betrifft ein Verfahren und System zur bidirektionalen Signalübertragung von Radiofrequenzsignalen in einem drahtlosen lokalen Netzwerk, bei welchem ein oder mehrere mobile Einheiten mittels Radiofrequenzsignalen im drahtlosen lokalen Netzwerk mit einer Basisstation kommunizieren, welche Basisstation die Radiofrequenzsignale der mobilen Einheiten verstärkt und/oder das drahtlose lokale Netzwerk mittels Bridgefunktionen mit einem verdrahteten Festnetzwerk verbindet.

Local Area Networks (LAN) bestehen üblicherweise aus sog. Nodes, welche verbunden sind über physikalische Medien, wie z.B. Coaxialkabel, Twisted Pair oder optische Glasfaserkabel. Diese LANs werden auch als wired LANs (verdrahtete Festnetze) bezeichnet. In den letzten Jahren sind auch drahtlose LANs, sog. wireless LANs immer populärer geworden (z.B. durch Entwicklungen wie das AirPort-System der Apple Computer, Inc.). Wireless LANs sind speziell geeignet um mobile Einheiten (Nodes), wie z.B. Laptops, Notebooks, PDAs (Personal Digital Assistant) oder Mobilfunkgeräte, insbesondere Mobilfunktelefone, mit einer entsprechenden Schnittstelle, in ein lokales Computernetzwerk einzubinden. Die mobilen Nodes besitzen einen Adapter, welcher einen Sender/Empfänger sowie eine Kontrollkarte umfasst (wie z.B. Infrarot(IR)-Adapter oder einen Tieffrequenzradiowellen-Adapter). Der Vorteil von solchen mobilen Nodes ist, dass sie innerhalb der Reichweite des wireless LANs frei bewegt werden können. Die mobilen Nodes kommunizieren entweder direkt miteinander (Peer-to-Peer wireless LAN) oder schicken ihr Signal an eine Basisstation, welche das Signal verstärkt und/oder weiterleitet. Die Basisstationen können ebenfalls Bridgefunktionen umfassen. Über solche Basisstationen mit Bridge-Funktionen, sog. Access Points (AP), können die mobilen Nodes des drahtlosen LAN auf ein wired LAN zugreifen. Typische Netzwerkfunktionen eines Access Points umfassen das Übertragen von Meldungen von einem mobilen Node zu einem anderen, das Senden von Meldungen vom wired LAN zu einem mobilen Node und das Übertragen von Meldungen eines mobilen Nodes auf das wired LAN. Die physikalische Reichweite eines AP wird Basic Service Area (BSA) genannt. Befindet sich ein mobiler Node innerhalb der BSA eines AP kann er mit diesem AP kommunizieren, falls der AP ebenfalls innerhalb der Signal-Reichweite (Dynamic Service Area (DSA)) des mobilen Nodes liegt. Mobile Nodes besitzen typischerweise eine Signalstärke von 100 mWatt bis zu einem Watt. Um das wireless LAN mit dem wired LAN zu verbinden, ist es für den AP wichtig zu bestimmen, ob eine bestimmte Meldung (information frame) auf dem Netz für einen Node bestimmt ist, der innerhalb des wired LAN oder innerhalb des wireless LAN liegt, und diese Information, falls notwendig, an den entsprechenden Node weiterzuleiten. Für diesen Zweck besitzen APs sog. Bridge-Funktionen, z.B. entsprechend dem Standard IEEE Std 802.1D-1990 "Media Access Control Bridge" (31-74 ff). Bei solchen Bridgefunktionen wird ein neuer mobiler Node im wireless LAN typischerweise in einer FDB (Filtering Database) des AP registriert, in dessen Reichweite der Node liegt. Bei jedem Information-Frame auf dem LAN, vergleicht der AP die Zieladresse mit den Adressen (MAC-Adressen (Media Access Control Addresses)), welche er im FDB abgespeichert hat und sendet, verwirft oder überträgt den Frame auf das wired LAN bzw. auf das wireless LAN. Die Reichweite eines wireless LAN ist limitiert durch Faktoren wie z.B. Wellenlänge des Signals, Signalstärke, Hindernisse etc.. Die Radiofrequenzparameter sind aber nicht frei wählbar. In den meisten Ländern bestehen mehr oder weniger strenge Vorschriften, was die Tieffrequenzübertragung für wireless LANs betrifft. Dies gilt insbesondere z.B. für die USA. In der USA werden die Bestimmungen durch die United States Federal Communications Commission (FCC) erlassen (D 15, Title 47, Code of Federal Regulations 1985). Drei Bandbreiten sind erlaubt: 902-928 MHz, 2400-2483,5 MHz und 5725-5850 MHz. Viele Anwendungen benutzen heute das 900 MHz Band. Die Datenmenge, welche über das 900 MHz Band übertragen werden kann, ist aber limitiert durch die begrenzte Frequenzbandbreite in diesem Band. Deshalb benutzen immer mehr Anwendungen das Frequenzband um 2400 MHz. Zukünftige Applikationen werden voraussichtlich auch das Band um 5800 MHz benutzen, um den wachsenden Anforderungen nach höherem Datendurchsatz zu genügen. Bei höheren Frequenzen treten aber andere schwierig zu lösende Probleme der wireless LANs verstärkt in den Vordergrund. Z.B. wird die Fortpflanzung der Radiofrequenzen durch ein Gebäude oder eine verdeckte Fläche signifikant richtungsabhängiger. Zusätzlich werden die Frequenzenergie höherer Frequenzbänder bedeutend mehr beeinflusst durch Wände, Einrichtungen, Decken und andere Objekte innerhalb eines Gebäudes. Als Folge davon treten vermehrt Orte auf, welche durch einen AP nicht abgedeckt werden, also z.B. im Signalschatten eines Hindernisses liegen. Abgesehen von Effekten, welche durch die Signalfortpflanzung entstehen, ist zu beachten, dass Applikationen mit einer höheren Datenrate ebenfalls Empfänger mit einer grösseren Bandbreite voraussetzen. Wird die Empfangsbandbreite erhöht, erhöht sich ebenfalls das Empfangsuntergrundrauschen. Eine Verminderung des Signal/Noise-Verhältnisses (z.B. durch thermisches Rauschen, men-made Rauschen und Ausbreitungsdämpfung) ist typisch, wenn von einem tieferen Frequenzband zu einem höheren Frequenzband übergegangen wird. Das tiefere Signal/Noise-Verhältnis hat eine kleinere BSA bzw. DSA zur Folge, als erreicht würde mit einer engeren Bandbreite. Zusammenfassend lässt sich sagen, dass eine höhere Datenübertragungskapazität den Übergang zu höheren Radiofrequenzen verlangt, um von der grösseren Bandbreite zu profitieren. Dies reduziert jedoch die Raumdeckung der Radiofrequenzen eines bestimmten AP. Ganz allgemein gilt, dass, um die Raumdeckung zu erhöhen, auch die Anzahl der APs erhöht werden muss, was aber eine signifikante Erhöhung der Kosten zur Folge hat. APs mit Bridgefunktionen sind relativ teuer im Vergleich zu den Kosten des LAN. Modifikationen an bestehenden APs (z.B. durch Erweiterung mit zusätzlichen Antennen, bzw. Antennenanschlüssen) können aber wegen strengen Richtlinien, wie z.B. in der USA (FCC), Schweiz (BAKOM) etc., zumeist nicht oder nicht in der gewünschten Art vorgenommen werden. Bei höheren Frequenzen nehmen die Kosten für die APs zusätzlich zu, da die Hardware Kosten für Komponenten, welche mit höheren Frequenzen arbeiten, signifikant höher sind. Bei höheren Frequenzen wird ebenfalls die Flächendeckung (Hindernisse, Reichweite etc.) schlechter, was nach weiteren APs verlangt, um die Raumdeckung mit Radiofrequenzen zu gewährleisten.

Es ist eine Aufgabe dieser Erfindung, ein neues Verfahren und System zur bidirektionalen Signalübertragung in drahtlosen LANs vorzuschlagen, welches die oben beschriebenen Nachteile nicht aufweist. Insbesondere sollen keine Modifikationen an den bestehenden AP notwendig sein.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur bidirektionalen Signalübertragung von Radiofrequenzsignalen in einem drahtlosen lokalen Netzwerk, bei welchem ein oder mehrere mobile Einheiten mittels Radiofrequenzsignalen im drahtlosen lokalen Netzwerk mit einer Basisstation kommunizieren und welche Basisstation die Radiofrequenzsignale der mobilen Einheiten verstärkt und/oder das drahtlose lokale Netzwerk mittels Bridgefunktionen mit einem verdrahteten Festnetzwerk verbindet, wobei Radiofrequenzsignale über eine Antenne der Basisstation abgestrahlt werden und die Radiofrequenzsignale der Antenne über ein Kopplungselement, einen Wellenleiter und eine Zweitantenne in ein ursprünglich mit dem Radiofrequenzsignal der Antenne der Basisstation nicht oder ungenügend versorgtes Gebiet geleitet werden und/oder Radiofrequenzsignale von mobilen Einheiten des nicht oder ungenügend versorgten Gebietes in umgekehrter Richtung zur Antenne der Basisstation geleitet werden. Insbesondere wird das Kopplungselement stark an das Radiofrequenzsignal der Basisstation angekoppelt, indem es in einer Distanz zwischen 0 und 10 Wellenlängen der übertragenen Radiofrequenzsignale von der Antenne der Basisstation im Strahlungsfeld der Antenne positioniert wird, und das genannte Gebiet und die Basisstation werden über den Wellenleiter so verbunden, dass die Werte für die Differenz des Gewinns der Zweitantenne und des Gewinns des Kopplungselements unter Berücksichtigung der Dämpfung durch den Wellenleiter kleiner als 40 dB (Dezibel) sind. Die Erfindung hat u.a. den Vorteil, dass kein Aktivverstärker benötigt wird. Dies reduziert signifikant die Kosten, welche benötigt werden, um bei einem System mit ungenügender Raumabdeckung die gewünschte Flächendeckung zu erreichen (z.B. wie erwähnt, bedingt durch einen Wechsel des Frequenzbandes zu höheren Frequenzen). Einerseits betrifft dies Wartung und Energieverbrauch, anderseits fallen Probleme wie Signalsynchronisation, Intermodulation, Zusatzrauschen durch die Dynamik des Verstärkers sowie Rückkopplungszustände durch den Verstärker etc. weg. Werden später einmal nicht vorgesehene Singnale grösserer Komplexität gesendet, braucht es bei dieser Erfindung keine Anpassungen um die Übertragung zu garantieren, was ein weiterer Vorteil ist. Dient die Basisstation gleichzeitig als Access Point zu einem wired LAN, d.h. besitzt sie Bridgefunktionen zu einem wired LAN, kommt der Kostenfaktor um so mehr zumTragen, da solche Bridges für LAN teuer sind. Die Realisierungskosten für die vorliegende Erfindung liegen im Vergleich zu den zur Zeit erhältlichen Basisstationen mit Bridgefunktionen um mindestens einen Faktor 10 tiefer. Durch die einfache Konstruktion sind Wartung und Installation verhältnismässig einfach. Insbesondere ist es mit der vorliegenden Erfindung unnötig, bestehende Basisstationen zu modifizieren. Damit fallen Probleme mit staatlichen Vorschriften betreffend solcher Modifikationen weg. Die vorliegende Erfindung verhält sich im Vergleich zum Stand der Technik völlig transparent und ist deshalb unabhängig von Modulationsverfahren, Leistung oder Anzahl Kanälen.

In einer Ausführungsvariante wird als Zweitantenne eine Richtantenne benutzt. Diese Ausführungsvariante hat insbesondere den Vorteil, dass sich die Sendeenergie in der gewünschten Richtung entsprechend der Richtcharakteristik der Antenne bündeln lässt und sich so Raumgegebenheiten einfach berücksichtigen lassen.

In einer weiteren Ausführungsvariante wird als Zweitantenne eine Parabolantenne benutzt. Diese Ausführungsvariante hat die gleichen Vorteile, wie die vorhergehende Ausführungsvariante.

In einer weiteren Ausführungsvariante werden für die Radiofrequenzen Bandbreiten zwischen 400 MHz und 6000 MHz benutzt. Diese Ausführungsvariante hat dieselben Vorteile wie die vorhergehende Ausführungsvariante. Mit diesem Frequenzintervall werden insbesondere die offiziell erlaubten Frequenzbänder (z.B. USA,D,CH) abgedeckt.

In einer Ausführungsvariante werden für die Radiofrequenzen Bandbreiten zwischen 20 GHz und 30 GHz benutzt. Diese Ausführungsvariante hat dieselben Vorteile wie die vorhergehende Ausführungsvariante. Mit diesem Frequenzintervall werden insbesondere WLL (Wireless-Local-Loop) Frequenzen abgedeckt.

In einer weiteren Ausführungsvariante liegen die Werte für den Gewinn der Zweitantenne zwischen 3 dBi und 20 dBi (Dezibel bezüglich eines Isotropenstrahlers). Diese Ausführungsvariante hat insbesondere den Vorteil, dass Antennen dieser Art relativ billig im Handel erhältlich sind und den Anforderungen der vorliegenden Erfindung in den meisten Fällen entsprechen.

In einer anderen Ausführungsvariante ist die Gesamtdämpfung des Wellenleiters kleiner als 30 dB.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

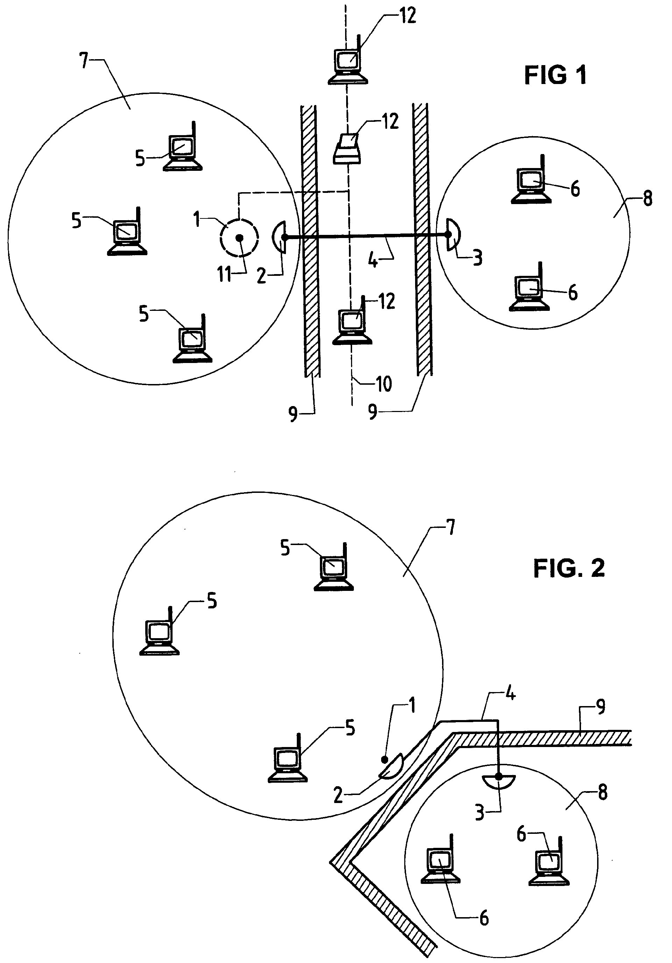

Figur 1 zeigt ein Blockdiagramm, welches schematisch eine Ausführungsvariante eines System zur bidirektionalen Signalübertragung von Radiofrequenzsignalen in drahtlosen lokalen Netzwerken illustriert, bei welchem ein Kopplungselement 2 stark an das Antennensignal der Basisstation 1 gekoppelt wird und über einen Wellenleiter 4 und eine Zweitantenne 3 ein bisher mit dem Antennensignal der Basisstation 1 nicht versorgtes Gebiet 8 versorgt.
Figur 2 zeigt ein Blockdiagramm, welches schematisch eine Ausführungsvariante eines Systems zur bidirektionalen Signalübertragung von Radiofrequenzsignalen in drahtlosen lokalen Netzwerken illustriert, bei welchem ein Kopplungselement 2 stark an das Antennensignal der Basisstation 1 gekoppelt wird und über einen Wellenleiter 4 und eine Zweitantenne 3 ein bisher mit dem Antennensignal der Basisstation 1 nicht versorgtes Gebiet 8 versorgt.

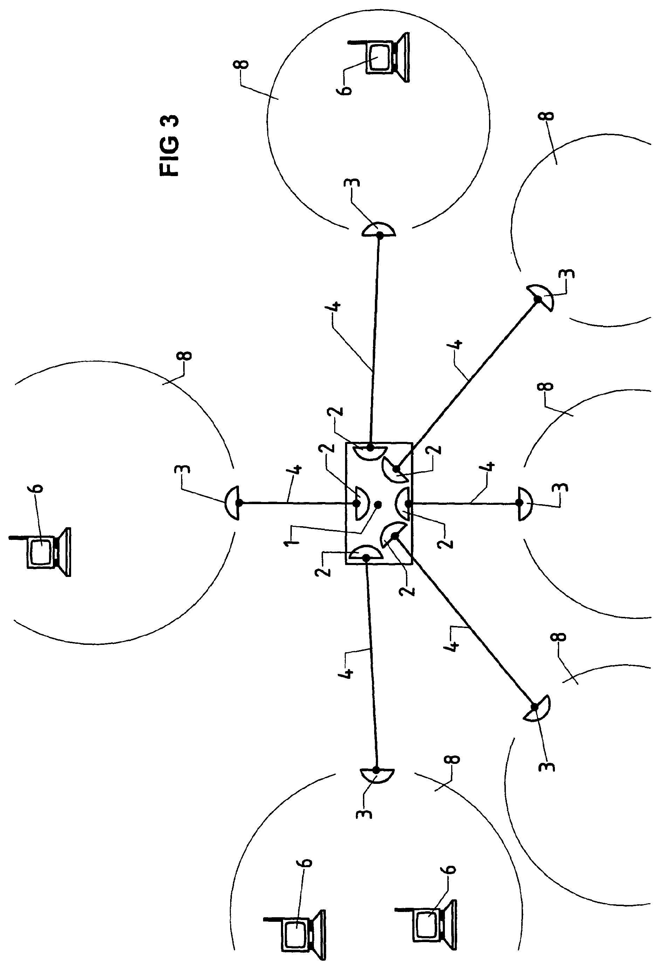

Figur 3 zeigt ein Blockdiagramm, welches schematisch eine Ausführungsvariante eines Systems zur bidirektionalen Signalübertragung von Radiofrequenzsignalen in drahtlosen lokalen Netzwerken illustriert, bei welchem mehrere Kopplungselemente 2 stark an das Antennensignal der Basisstation 1 gekoppelt werden und über einen Wellenleiter 4 und eine Zweitantenne 3 bisher mit dem Antennensignal der Basisstation 1 nicht versorgte Gebiete 8 versorgen.

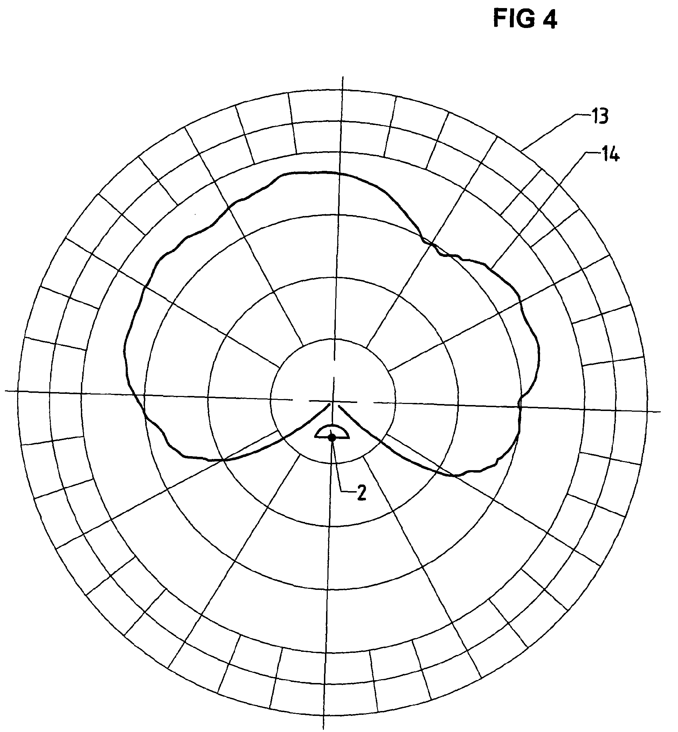

Figur 4 zeigt die Richtcharakteristik 14 einer Antenne 11 einer Basisstation1 unter dem Einfluss eines Kopplungselementes 2.

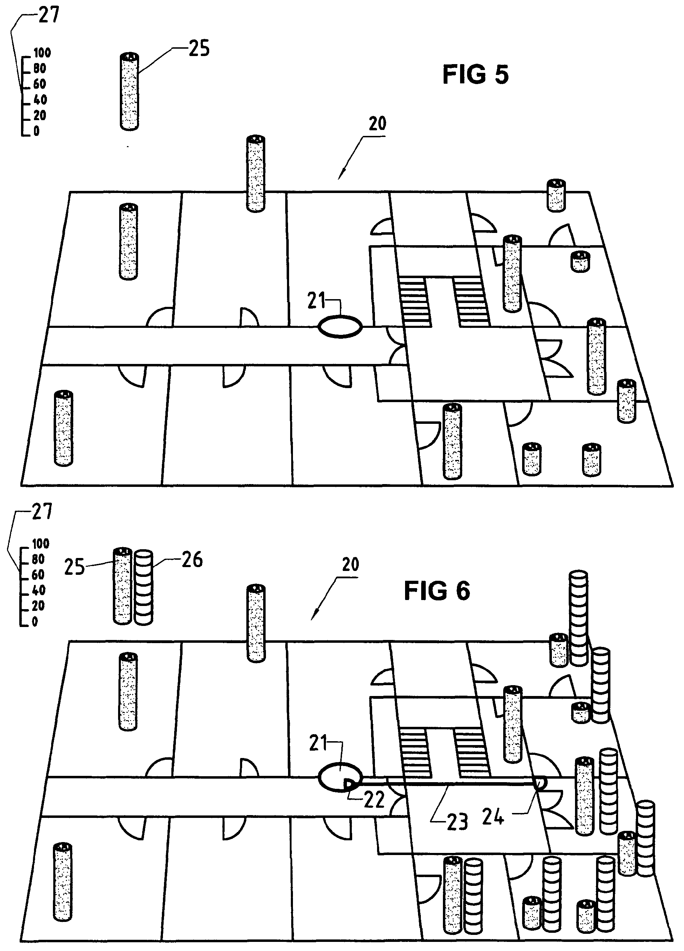

Figur 5 zeigt die Darstellung eines Gebäudegrundrisses, in welchem Gebäude ein verdrahtetes lokales Netzwerk über eine Basisstation, welche mit den entsprechenden Bridgefunktionen ausgestattet ist, mit einem drahtlosen lokalen Netzwerk verbunden ist. Die Empfangsleistung wird in Abhängigkeit des Ortes schematisch angedeutet.
Figur 6 zeigt die Darstellung eines Gebäudegrundrisses, in welchem Gebäude ein verdrahtetes lokales Netzwerk über eine Basisstation, welche mit den entsprechenden Bridgefunktionen ausgestattet ist, mit einem drahtlosen lokalen Netzwerk verbunden ist. In einem Teil des Gebäudekomplexes wird über eine passive Vorwärtsübertragung, wie sie in der vorliegenden Erfindung beschrieben wird, das Radiofrequenzsignal verstärkt und die Übertragungsleistung damit bidirektional verbessert. Die Empfangsleistung wird in Abhängigkeit des Ortes mit und ohne passive Vorwärtsübertragung schematisch angedeutet.

Figur 1 illustriert eine Architektur, die zur Realisierung der Erfindung verwendet werden kann. In diesem Ausführungsbeispiel kommunizieren ein oder mehrere mobile Einheiten (Nodes) 5/6 in einem drahtlosen lokalen Netzwerk (wireless Local Area Network: wireless LAN) mittels Radiofrequenzsignalen mit einer Basisstation 1. Die Basisstation 1 kann sowohl die Radiofrequenzsignale der mobilen Einheiten 5/6 verstärken, als auch Bridgefunktionen umfassen, welche es erlauben, vom drahtlosen lokalen Netzwerk 7/8 auf Nodes 12 eines verdrahteten LAN 10 und umgekehrt zuzugreifen. Zur Übertragung der Radiofrequenzsignale umfasst die Basisstation 1 eine Antenne 11. Die Antenne 11 kann z.B. eine Dipolantenne, eine Schleifenantenne wie eine Faltdipolantenne, eine Marconi-Antenne oder eine Groundplane-Antenne, eine Richtantenne wie z.B. eine Yagi-, eine Kreuzyagi- oder eine Parabolantenne, eine Rundstrahlantenne oder ein fraktales Antennensystem sein. Die Radiofrequenzsignale liegen typischerweise in den für drahtlose LAN reservierten Frequenzbändern zwischen 800 MHz und 6000 MHz, wie z.B. in der USA von der United States Federal Communication Commission (FCC) festgesetzten drei Frequenzbänder: 902-928 MHz, 2400-2483.5 MHz und 5725-5850 MHz (D 15 of Title 47 Code of Federal Regulations). Sie können aber beispielsweise auch im Bereich von 400 MHz, wie sie z.B. bei elektronischen, drahtlosen Garagenöffnern üblich sind, oder bei den zur Zeit in Deutschland und der Schweiz versteigerten WLL (Wireless-Local-Loop) Frequenzen bei z.B. 26 GHz für Wireless-Local-Loop Verfahren, liegen. In Deutschland werden die erlaubten Frequenzen z.B. durch die Regulierungsbehörde für Telekommunikation und Post (Reg TP) geregelt (Telekommunikationsgesetz (TKG) vom 25.07.96 (BGBI. I S. 1120), in der Schweiz ist es das Bundesamt für Kommunikation BAKOM. Die vorliegende Erfindung ist also denkbar für z.B. Funk, drahtlose Telefone, GSM, UMTS, drahtlose LAN, Hiperlan, Bluetooth etc.. Es ist aber zu erwähnen, dass prinzipiell die Erfindung auch für Infrarotsignale wie z.B. IrDA, IR-LAN etc. benutzt werden könnte. Die Bridgefunktionen der Basisstation 1 können z.B. gemäss IEEE Std. 802.1D-1990 "Media Access Control Bridges" S. 31-47 realisiert sein. Zur bidirektionalen Signalübertragung von Radiofrequenzsignalen in ein ursprünglich mit dem Radiofrequenzsignal der Antenne der Basisstation nicht oder ungenügend versorgtes Gebiet (Secondary Access Area: SAA) und/oder von mobilen Einheiten dieses Gebietes zum Empfangsgebiet der Antenne 11 der Basisstation 1 (Primary Access Area: PAA) werden die Radiofrequenzsignale über ein Kopplungselement 2, einen Wellenleiter 4 und eine Zweitantenne 3 geleitet, wobei das Kopplungselement 2 und der Wellenleiter 4, sowie der Wellenleiter 4 und die Zweitantenne 3, miteinander verbunden sind. Die Objekte 9 stellen Hindernisse, wie z.B. Wände, Mobiliar, Treppen etc. dar, die das Strahlungsfeld der PAA 7 beeinflussen bzw. abschirmen können. Es ist auch vorstellbar, dass es sich bei der PAA 7 und SAA 8 um Gebiete in unterschiedlichen Gebäuden handelt, wobei der Wellenleiter 4 dann z.B. über eine Strasse führen kann oder nur z.B. an die Aussenwand des Gebäudes der PAA 7, wobei das Gebäude mit der SAA 8 durch eine Richtantenne 3 mit starker Bündelung also einem kleinen Öffnungswinkel der Richtantenne 3 abgedeckt wird. Das Kopplungselement 2 und die Zweitantenne 3 können wie die Antenne 11 der Basisstation 1 z.B. eine Dipolantenne, eine Schleifenantenne, wie eine Faltdipolantenne, eine Marconi-Antenne oder eine Groundplane-Antenne, eine Richtantenne wie z.B. eine Yagi-, eine Kreuzyagi- oder eine Parabolantenne, eine Rundstrahlantenne oder ein fraktales Antennensystem sein. Als Beispiel solcher möglicher Produkte können sowohl für das Kopplungselement 2, als auch für die Zweitantenne 3 planare Antennen mit zirkularer Polarisation z.B. des Types 1324.19.0007 (Ihcp) oder planare Antennen z.B. des Types 1324.19.0006 der Firma Huber+Suhner AG, CH-9100 Herisau genommen werden. Als Wellenleiter 2 können z.B. ein Koaxialkabel oder ein anderer Wellenleiter verwendet werden wie sie z.B. in den ITU (International Telecommunication Union) Standards verwendet werden. Im Fall von Infrarotsignalen kann beispielsweise ein geeigneter Lichtleiter, z.B. optische Fasern, wie Glasfasern etc., verwendet werden. Das Kopplungselement 2 wird stark an das Radiofrequenzsignal der Basisstation 1 angekoppelt, indem es in einer Distanz zwischen 0 und 10 Wellenlängen der übertragenen Radiofrequenzsignale von der Antenne 11 der Basisstation 1 im Strahlungsfeld der Antenne 11 positioniert wird. Da das Kopplungselement 2 einen Teil der Strahlungsenergie der Antenne 11 der Basisstation 1 absorbiert, d.h. das Strahlungsfeld 7 der Basisstation 1 beeinflusst, kann es sinnvoll sein, das Kopplungselement z.B. auf der Seite eines Hindernisses 9, wie z.B. einer Wand, welches sowieso das Strahlungsfeld 7 in dieser Richtung abschirmt, im Strahlungsfeld 7 der Antenne 11 der Basisstation 1 zu positionieren oder das Kopplungselement in anderer Weise entsprechend der Richtcharakteristik der Antenne und den Umgebungseigenschaften, z.B. des Gebäudes im Strahlungsfeld der Antenne, speziell zu positionieren. Die Form des Strahlungsfeldes 7 der PAA, d.h. die Form des Strahlungsfeldes 7 in Abhängigkeit seiner Feldstärke, kann typischerweise in einem Richtdiagramm dargestellt werden. Eine Darstellung eines solchen Richtdiagramms 13 einer Antenne 11 einer Basisstation 1 unter dem Einfluss eines Kopplungselementes 2 zeigt Figur 4. In Figur 1 wird die PAA 7, deren Strahlungsfeld 7 von der Antenne 11 der Basisstation 1 stammt, über das Kopplungselement 2 und den Wellenleiter 4 zur Zweitantenne 3 geleitet und in der SAA 8 abgestrahlt. Wie erwähnt, handelt es sich bei der SAA 8 um ein Gebiet, dass ohne das System zur passiven Vorwärtsübertragung von Radiofrequenzsignalen mit dem Radiofrequenzsignal der Basisstation 1 nicht oder ungenügend versorgt ist. Die Signalübertragung funktioniert mit der vorliegenden Erfindung bidirektional und ist durch seine Konstruktionsweise unabhängig von Modulationsverfahren, Signalsynchronisation, Leistung oder Anzahl Kanälen. Bidirektional heisst, dass sowohl die Nodes 6 der SAA 8 mit der Basisstation 1 als auch umgekehrt kommunizieren können. Damit können auch die Nodes 5 der PAA 7 über die Basisstation 1 mit den Nodes 6 der SAA 8 kommunzieren. Voraussetzung ist natürlich, dass die Antenne 11 der Basisstation 1 ebenfalls innerhalb der DSA (Dynamic Service Area) des betreffenden mobilen Nodes 5/6 liegt. Die SAA 8 und die Basisstation 1 sind über das System zur passiven Vorwärtsübertragung von Radiofrequenzsignalen so verbunden, dass die Werte DF für die Differenz des Gewinns der Zweitantenne 3 und des Gewinns des Kopplungselements 2 unter Berücksichtigung der Dämpfung durch den Wellenleiter 4 kleiner als 40 dB (Dezibel) sind. Damit ist das Linkbudget erhalten und die Bidirektionalität gewährleistet. Je höher der Dämpfungsfaktor, d.h. der obengenannte Wert DF ist, desto kleiner wird die SAA 8, wobei es möglich ist, dass das Strahlungsfeld 8 bei zu starker Dämpfung und z.B. Hindernissen in der SAA 8 nur noch an diskreten Orten das Kommunizieren mit der Basisstation erlaubt.
Figur 2 illustriert eine Realisierung der Erfindung. Wie im vorhergehenden Ausführungsbeispiel kommunizieren hier ein oder mehrere mobile Einheiten (Nodes) 5/6 in einem drahtlosen lokalen Netzwerk mittels Radiofrequenzsignalen mit einer Basisstation 1. Figur 2 zeigt, wie das Strahlungsfeld einer PAA 7 eines drahtlosen LAN über das Kopplungselement 2 und den Wellenleiter 4 zur Zweitantenne 3 geleitet und in einer SAA 8 abgestrahlt wird, wobei das drahtlose LAN 7/8 nicht wie in Figur 1 über Bridge-Funktionen der Basisstation 1 zusätzlich mit einem verdrahteten LAN verbunden ist. Die Signalübertragung funktioniert ebenfalls bidirektional. Alle weiteren im oberen Ausführungsbeispiel beschriebenen Merkmale und Funktionen treffen auch für dieses Ausführungsbeispiel zu.
Figur 3 illustriert eine Architektur, die zur Realisierung der Erfindung verwendet werden kann. Wie im vorhergehenden Ausführungsbeispiel kommunizieren hier ein oder mehrere mobile Einheiten (Nodes) 6/7 in einem drahtlosen lokalen Netzwerk mittels Radiofrequenzsignalen mit einer Basisstation 1. Als Unterschied zum Ausführungsbeispiel 1 werden bei diesem Ausführungsbeispiel statt einem mehrere Kopplungselemente 2 stark an das Antennensignal der Basisstation 1 gekoppelt, welches Antennensignal über einen Wellenleiter 4 und eine Zweitantenne 3 in bisher mit dem Antennensignal der Basisstation 1 nicht versorgte Gebiete SAA 8 geleitet wird. Die Signalübertragung funktioniert ebenfalls bidirektional. Alle weiteren im ersten Ausführungsbeispiel beschriebenen Merkmale und Funktionen treffen auch für dieses Ausführungsbeispiel zu. Natürlich ist es so, dass bei der Ankopplung von mehreren Kopplungselementen 2, die Strahlungsenergie der PAA 7 entsprechend der Anzahl Kopplungselemente 2 sinkt. Es ist ebenso vorstellbar, dass die PAA 7 von mobilen Nodes 6 gar nicht benötigt wird, und die gesamte Strahlungsenergie in SAA 8 übertragen wird.
Figur 4 zeigt ein Beispiel einer Richtcharakteristik 14 einer Antenne 11 einer Basisstation 1 unter dem Einfluss eines Kopplungselementes 2 in einem Horizontaldiagramm 13. Das Kopplungselement 2 koppelt dabei stark an das Antennensignal der Basisstation 1 an, in dem es in diesem Beispiel im Abstand von etwa 1-2 Wellenlängen von der Antenne 11 der Basisstation 1 angebracht wurde.
Figur 5 zeigt ein Beispiel eines Gebäudegrundrisses 20, in welchem Gebäude 20 ein verdrahtetes LAN über eine Basisstation, welche mit den entsprechenden Bridgefunktionen ausgestattet ist, mit einem drahtlosen LAN verbunden wird. Die gemessene Empfangsleistung wird in Abhängigkeit des Ortes durch die Höhe der Zylinder 25 schematisch angedeutet. Eine schwächere Empfangsleistung kann insbesondere eine schlechtere Übertragungsrate bedueten. Die Höhe 100 der Skala 27 gibt die maximal mögliche Übertragungsrate des benutzten Frequenzbandes, Übertragungsprotokolls etc. an. Für heutige drahtlose LAN liegen die Werte im Bereich von KBits pro Sekunde bis MBits pro Sekunde.
Figur 6 zeigt ein Beispiel eines Gebäudegrundrisses 20, in welchem Gebäude 20 ein verdrahtetes lokales Netzwerk über eine Basisstation, welche mit den entsprechenden Bridgefunktionen ausgestattet ist, mit einem drahtlosen lokalen Netzwerk verbunden wird. Das Strahlungsfeld der Antenne der Basisstation 21 wird gemäss der vorliegenden Erfindung über ein Kopplungselement 22 und einen Wellenleiter 23 zu einer Zweitantenne 24 geleitet und abgestrahlt. Die gepunkteten Zylinder 25 zeigen die gemessene Empfangsleistung des PAA, d.h. also ohne passive, bidirektionale Signalübertragung gemäss der vorliegenden Erfindung. Die geringten Zylinder 26 geben die gemessene Empfangseleistung mit SAA an, d.h. also nach der Installation des Systems zur passiven, bidirektionalen Signalübertragung gemäss der vorliegenden Erfindung. Wie mit dem Diagramm leicht gezeigt werden kann, führt dies zu einer im Gebiet des SAA signifikant verbesserten Übertragungsleistung. Wie in Figur 5 wird hier die Empfangsleistung in Abhängigkeit des Ortes durch die Höhe der Zylinder schematisch angedeutet. Die Höhe 100 der Skala 27 gibt die maximal mögliche Übertragungsrate des benutzten Frequenzbandes, Übertragungsprotokolls etc. an.

## Patentansprüche

1. Verfahren zur bidirektionalen Signalübertragung von Radiofrequenzsignalen in einem drahtlosen lokalen Netzwerk, bei welchem ein oder mehrere mobile Einheiten (5/6) mittels Radiofrequenzsignalen im drahtlosen lokalen Netzwerk mit einer Basisstation (1) kommunizieren, welche Basisstation (1) die Radiofrequenzsignale der mobilen Einheiten (5/6) verstärkt und/oder das drahtlose lokale Netzwerk mittels Bridgefunktionen mit einem verdrahteten Festnetzwerk (10) verbindet, wobei Radiofrequenzsignale über eine Antenne (11) der Basisstation (1) abgestrahlt werden, **dadurch gekennzeichnet,**
**dass** die Radiofrequenzsignale der Antenne (11) über ein Kopplungselement (2), einen Wellenleiter (4) und eine Zweitantenne (3) in ein ursprünglich mit den Radiofrequenzsignalen der Antenne (11) der Basisstation (1) nicht oder ungenügend versorgtes Gebiet (8) geleitet werden und/oder Radiofrequenzsignale von mobilen Einheiten (6) dieses Gebietes (8) in umgekehrter Richtung zur Antenne (11) der Basisstation (1) geleitet werden,
**dass** das Kopplungselement (2) stark an die Radiofrequenzsignale der Antenne (11) der Basisstation (1) angekoppelt wird, indem es in einer Distanz zwischen 0 und 10 Wellenlängen der übertragenen Radiofrequenzsignale von der Antenne (11) der Basisstation (1) im Strahlungsfeld der Antenne (11) positioniert wird, und
**dass** das genannte Gebiet (8) und die Basisstation (1) über den Wellenleiter (4) so verbunden werden, dass die Werte für die Differenz des Gewinns der Zweitantenne (3) und des Gewinns des Kopplungselements (2) unter Berücksichtigung der Dämpfung durch den Wellenleiter (4) kleiner als 40 dB (Dezibel) sind.

2. Verfahren nach Anspruch 1, **dadurch gekennzeichnet, dass** als Zweitantenne (3) eine Richtantenne benutzt wird.

3. Verfahren nach Anspruch 1, **dadurch gekennzeichnet, dass** als Zweitantenne (3) eine Parabolantenne benutzt wird.

4. Verfahren nach einem der Ansprüche 1 bis 3, **dadurch gekennzeichnet, dass** für die Radiofrequenzen Bandbreiten zwischen 400 MHz und 6000 MHz benutzt werden.

5. Verfahren nach einem der Ansprüche 1 bis 3, **dadurch gekennzeichnet, dass** für die Radiofrequenzen Bandbreiten zwischen 20 GHz und 30 GHz benutzt werden.

6. Verfahren nach einem der Ansprüche 1 bis 5, **dadurch gekennzeichnet, dass** die Werte für den Gewinn der Zweitantenne (3) zwischen 3 dBi und 20 dBi (Dezibel bezüglich eines Isotropenstrahlers) liegen.

7. Verfahren nach einem der Ansprüche 1 bis 6, **dadurch gekennzeichnet, dass** die Gesamtdämpfung des Wellenleiters (4) kleiner als 30 dB ist.

8. System zur bidirektionalen Signalübertragung von Radiofrequenzsignalen in einem drahtlosen lokalen Netzwerk, welches System ein drahtloses lokales Netzwerk und eine Basisstation (1) umfasst, welche Basisstation (1) ein Modul zum Verstärken von Radiofrequenzsignalen von mobilen Einheiten (5/6) des drahtlosen lokalen Netzwerkes und/oder ein Modul mit Bridgefunktionen zum Verbinden des drahtlosen lokalen Netzwerkes mit einem verdrahteten Festnetzwerk (10) sowie eine Antenne (11) zum Senden und Empfangen von Radiofrequenzsignalen umfasst, **dadurch gekennzeichnet,**
**dass** das System ein Kopplungselement (2) zur Antenne (11) der Basisstation (1) umfasst, wobei das Kopplungselement (2) zur starken Ankopplung an die Radiofrequenzsignale der Antenne (11) in einer Distanz zwischen 0 und 10 Wellenlängen der übertragenen Radiofrequenzsignale von der Antenne (11) der Basisstation (1) im Strahlungsfeld der Antenne (11) positioniert ist,
**dass** das System einen mit dem Kopplungselement (2) verbundenen Wellenleiter (4) und eine ebenfalls mit dem Wellenleiter (4) verbundene Zweitantenne (3) umfasst, wobei über das Kopplungselement (2), den Wellenleiter (4) und die Zweitantenne (3) die Radiofrequenzsignale der Antenne (11) in ein ursprünglich mit dem Antennensignal der Basisstation (1) nicht oder ungenügend versorgtes Gebiet (8) leitbar sind und/oder Radiofrequenzsignale von mobilen Einheiten (6) dieses Gebietes (8) in umgekehrter Richtung zur Antenne (11) der Basisstation (1) leitbar sind, und
**dass** die Werte für die Differenz des Gewinns der Zweitantenne (3) und des Gewinns des Kopplungselementes (2) unter Berücksichtigung der Dämpfung durch den Wellenleiter (4) kleiner als 40 dB (Dezibel) sind.

9. System nach Anspruch 8, **dadurch gekennzeichnet, dass** die Zweitantenne (3) aus einer Richtantenne besteht.

10. System nach Anspruch 8, **dadurch gekennzeichnet, dass** die Zweitantenne (3) aus einer Parabolantenne besteht.

11. System nach einem der Ansprüche 8 bis 10, **dadurch gekennzeichnet, dass** die Bandbreite der Radiofrequenzsignale zwischen 400 MHz und 6000 MHz liegen.

12. System nach einem der Ansprüche 8 bis 10, **dadurch gekennzeichnet, dass** die Bandbreite der Radiofrequenzsignale zwischen 20GHz und 30GHz liegen.

13. System nach einem der Ansprüche 8 bis 12, **dadurch gekennzeichnet, dass** die Werte für den Gewinn der Zweitantenne (3) zwischen 3 dBi und 20 dBi (Dezibel bezüglich eines Isotropenstrahlers) liegen.

14. System nach einem der Ansprüche 8 bis 13, **dadurch gekennzeichnet, dass** die Gesamtdämpfung des Wellenleiters (4) kleiner als 30 dB ist.
